# FASCICULE DE BREVET EUROPEEN

(11) **EP 2 674 658 B1**
(45) Date de publication et mention de la délivrance du brevet: **24.12.2014**
(21) Numéro de dépôt: 13172087.2
(22) Date de dépôt: 14.06.2013
(51) Int. Cl.: F16L 37/23

(54) **Elément de raccord fluidique et ensemble correspondant**
Fluidkupplungselement und entsprechende Anordnung
Fluid coupling element and correspondent assembly

(30) Priorité: 15.06.2012 FR 1255596
(43) Date de publication de la demande: 18.12.2013
(73) Titulaire: STAUBLI FAVERGES, 74210 FAVERGES (FR)
(72) Inventeur: Tiberghien, Alain-Christophe, 74320 Sevrier (FR); Durieux, Christophe, 73200 Gilly Sur Isere (FR); Marques Barroca, Serafim, 73460 Frontenex (FR)
(74) Mandataire: Myon, Gérard Jean-Pierre

(56) Documents cités:
- EP-A1- 2 088 360
- DE-A1- 3 023 377

## Description

La présente invention concerne un élément de raccord fluidique, du type comprenant : un corps de base définissant un axe central (X-X) d'emmanchement d'un élément de raccord fluidique complémentaire, une bague de verrouillage, mobile par rapport au corps de base, au moins une bille de verrouillage apte à verrouiller l'élément de raccord fluidique complémentaire par rapport au corps de base, la ou chaque bille de verrouillage étant mobile radialement dans le corps entre une position de verrouillage, dans laquelle la bille de verrouillage est apte à verrouiller l'élément de raccord fluidique complémentaire, et une position de déverrouillage, dans laquelle la bille de verrouillage libère le passage pour l'élément de raccord fluidique complémentaire, au moins une bille d'actionnement de la bague de verrouillage apte à être repoussée dans un logement allongé du corps de base par l'élément de raccord fluidique complémentaire au cours de l'accouplement de l'élément de raccord et de l'élément de raccord complémentaire, pour déplacer axialement la bague de verrouillage depuis une position de blocage, dans laquelle la ou chaque bille de verrouillage est bloquée dans ladite position de verrouillage, au moins jusqu'à une position de libération dans laquelle la ou chaque bille de verrouillage est libre de se déplacer dans ladite position de déverrouillage des moyens de rappel de la bague de verrouillage vers ladite position de blocage.

Elle s'applique en particulier à des raccords fluidiques dans l'industrie chimique ou alimentaire.

Un ensemble de raccord comprenant un tel élément de raccord est connu de DE3023377. Ce document divulgue un raccord avec billes d'actionnement (dans la partie inférieure des figures 1 et 2 de ce document) logées dans un logement allongé. Ces billes repoussées par l'élément de raccord complémentaire I déplacent la bague de verrouillage de manière à ce que les billes de verrouillage (dans la partie supérieure des figures 1 et 2 de ce document) puissent s'engager dans l'élément I pour son verrouillage. Il est explicite que toutes les billes ont le même diamètre.

Un autre ensemble de raccord est connu de EP2088360, qui divulgue un raccord dans lequel la bille de verrouillage participe également au déplacement de la bague de verrouillage à l'accouplement et dans lequel l'angle α de la surface de l'élément de raccord complémentaire 32a au contact de la bille d'actionnement est supérieur à l'angle β de la surface inclinée 50a de la bague de verrouillage au contact de la bille d'actionnement lorsque la bille d'actionnement déplace la bague de verrouillage.

Dans ces deux documents de l'état de la technique, étant donné les faibles dépassements radiaux de la bille d'actionnement, de même diamètre que la bille de verrouillage, de part et d'autre du corps, et du fait des jeux radiaux de fonctionnement, on ne peut pas garantir que les appuis de la bille d'actionnement se fassent contre la surface conique telle que 32a d'EP2088360 et contre la surface conique de type 50a (d'EP2088360) plutôt que sur les congés de raccordement de ces surfaces. On ne peut donc pas garantir, malgré α>β, que la bille d'actionnement reste en prise entre la bague de verrouillage et l'élément de raccord complémentaire sans être chassée radialement vers l'extérieur lors du recul de la bague de verrouillage pour l'accouplement.

De plus, du fait des jeux de fonctionnement et des tolérances de fabrication, il n'est pas exclu dans DE3023377 que la bille de verrouillage ait à actionner la bague de verrouillage pour l'accouplement, ce qui conduirait à des efforts de connexion très importants.

L'invention a pour but de résoudre au moins l'un de ces inconvénients et de proposer un élément de raccord qui permette un accouplement fiable, et ceci de préférence avec des moyens économiques.

A cet effet, l'invention a pour objet un élément tel que défini ci-dessus, caractérisé en ce que la ou chaque bille d'actionnement a un diamètre (D) supérieur au diamètre (d) de la ou de chaque bille de verrouillage.

Selon des modes de réalisation, l'élément selon l'invention comporte l'une ou plusieurs des caractéristiques suivantes :
- le diamètre (D) de la ou de chaque bille d'actionnement est compris entre 105% et 125% du diamètre (d) de la ou de chaque bille de verrouillage ;
- lorsque la bague de verrouillage est dans ladite position de blocage en l'état désaccouplé du raccord, la ou chaque bille d'actionnement dépasse du corps de base radialement de part et d'autre d'une distance sensiblement identique ;
- une extrémité arrière du logement allongé comporte une pente formant un angle (γ) compris entre 105° et 130° par rapport à l'axe central (X-X) ;
- au cours de l'accouplement, la position la plus en avant de la bague de verrouillage dans laquelle la ou chaque bille de verrouillage est libre de se déplacer radialement dans ladite position de déverrouillage est située axialement entre ladite position de blocage et une position de la bague de verrouillage, dans laquelle la ou chaque bille d'actionnement entre en contact avec une extrémité arrière du logement allongé,
- lorsque la bague de verrouillage est dans ladite position de blocage en l'état désaccouplé du raccord, la bague de verrouillage est repoussée contre la ou chaque bille d'actionnement et la ou chaque bille d'actionnement est en contact avec une extrémité avant du logement allongé ;
- la surface externe du corps de base sur laquelle est ménagé ledit logement allongé est une surface de révolution autour de l'axe central (X-X) et la surface interne de la bague de verrouillage est une surface de révolution autour de l'axe central (X-X) ; et
- l'élément de raccord fluidique comprend au moins trois billes d'actionnement.

L'invention a également pour objet un ensemble de raccord fluidique comprenant un élément de raccord fluidique et un élément de raccord fluidique complémentaire, caractérisé en ce que l'élément de raccord fluidique est un élément tel que décrit ci-dessus.

Selon les modes de réalisation, l'ensemble peut comporter l'une ou plusieurs des caractéristiques suivantes :
- l'élément de raccord fluidique complémentaire comprend une collerette d'actionnement de la ou chaque bille d'actionnement pour le déplacement de la bague de verrouillage depuis ladite position de blocage jusqu'au moins ladite position de libération au cours de l'accouplement et une rainure adaptée pour recevoir la ou chaque bille de verrouillage dans ladite position de verrouillage en l'état accouplé de l'ensemble de raccord ;
- la collerette comporte une première pente d'actionnement inclinée d'un premier angle (α) par rapport à l'axe central, la bague de verrouillage comporte une seconde pente d'actionnement, la seconde pente d'actionnement étant inclinée d'un second angle (β) par rapport à l'axe central, la ou chaque bille d'actionnement est en prise entre la première pente d'actionnement de l'élément de raccord complémentaire et la seconde pente d'actionnement de la bague de verrouillage pour le déplacement de la bague d'actionnement depuis ladite position de blocage jusqu'au moins ladite position de libération au cours de l'accouplement et en ce que le premier angle (α) est supérieur au deuxième angle (β) ;
- au cours de l'accouplement, lorsque la ou chaque bille d'actionnement entre en contact avec un sommet de ladite collerette, la ou chaque bille de verrouillage est au contact du sommet ou radialement en regard de ladite rainure ;
- au cours de l'accouplement, lorsque la ou chaque bille d'actionnement entre en contact avec une extrémité arrière du logement allongé, la ou chaque bille de verrouillage dépasse radialement sur l'extérieur du corps de base ;
- l'élément de raccord fluidique comprend un joint d'étanchéité et l'élément de raccord fluidique complémentaire comprend une surface d'étanchéité adaptée pour coopérer avec ledit joint d'étanchéité à l'état accouplé de l'ensemble de raccord, la ou chaque bille de verrouillage et/ou d'actionnement est apte à occuper une position radialement intérieure extrême, et dans ladite position radialement intérieure extrême, la bille de verrouillage et/ou d'actionnement est située radialement à l'écart d'un diamètre extérieur (DE) de ladite surface d'étanchéité ; et
- en position de blocage de la bille de verrouillage dans ladite position de verrouillage en l'état accouplé de l'ensemble de raccord, la bague de verrouillage est élastiquement repoussée contre la bille d'actionnement et la bille d'actionnement n'est pas au contact de l'élément de raccord fluidique complémentaire.

L'invention sera mieux comprise à la lecture de la description qui va suivre, donnée uniquement à titre d'exemple et faite en se référant aux dessins annexés, sur lesquels :
- la Figure 1 montre une vue en coupe axiale brisée de l'ensemble selon l'invention à l'état désaccouplé ;
- la Figure 2 montre une vue analogue à celle de la figure 1, lors de l'accouplement dans la configuration dans laquelle l'élément de raccord complémentaire parvient au contact de l'organe d'actionnement ;
- la Figure 3 montre une vue analogue à celle de la figure 1, lors de l'accouplement dans la configuration dans laquelle l'élément de raccord complémentaire parvient au contact de l'organe de verrouillage ;
- la Figure 4 montre une vue analogue à celle de la figure 1, lors de l'accouplement dans la configuration dans laquelle l'organe d'actionnement entre en contact avec une extrémité du logement;
- la Figure 5 montre une vue analogue à celle de la figure 1, lors de l'accouplement dans la configuration dans laquelle l'organe de verrouillage est dans la position de déverrouillage;

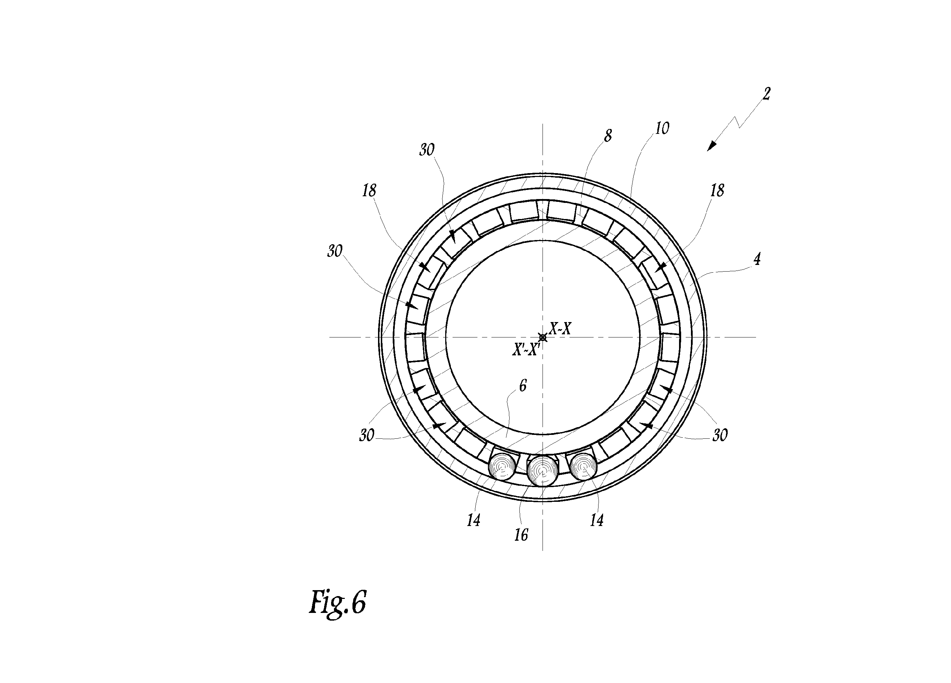

- la Figure 6 montre une vue en coupe transversale selon la ligne VI-VI de la Figure 5 ;
- la Figure 7 montre une vue analogue à celle de la figure 1, l'ensemble étant en configuration accouplée, l'organe de verrouillage étant dans sa position de verrouillage ; et
- la Figure 8 montre une vue analogue à celle de la figure 1, lors du désaccouplement.

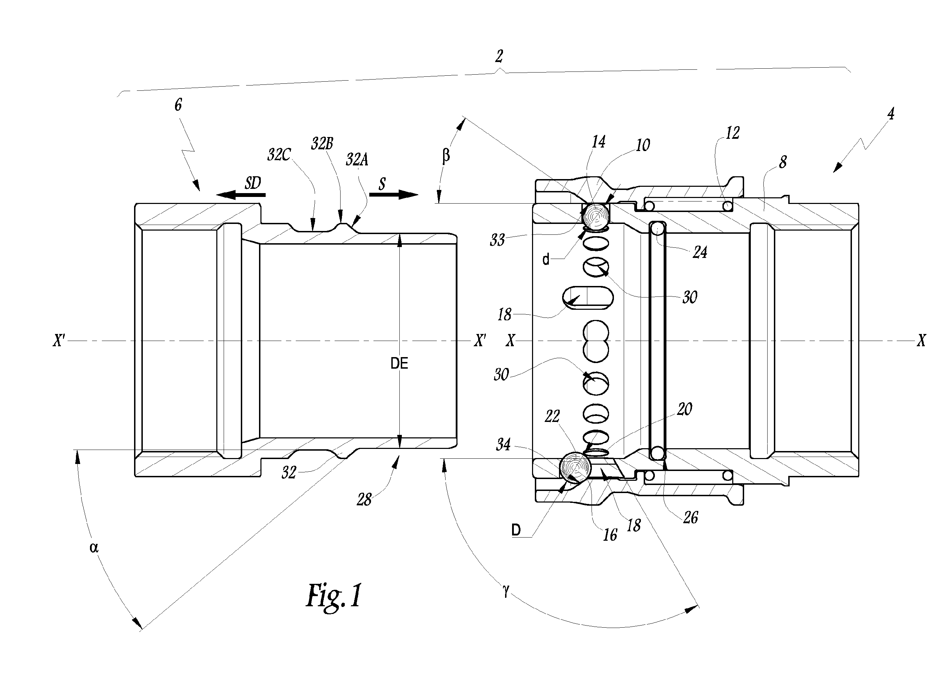

Sur la figure 1 est représenté un ensemble de raccord fluidique selon l'invention, désigné par la référence générale 2.

L'ensemble de raccord fluidique 2 comprend un élément de raccord fluidique 4 et un élément de raccord fluidique complémentaire 6.

L'élément de raccord fluidique 4 comprend un corps de base 8 de révolution autour d'un axe central X-X d'emmanchement avec l'élément de raccord fluidique complémentaire 6 , une bague de verrouillage 10 et un ressort 12. Dans ce qui suit, les expressions « axiale », et « radiale » seront utilisées par rapport à cet axe X-X.

Les expressions « avant » et « arrière » seront utilisées par la suite relativement à l'élément de raccord fluidique 4 ou l'élément de raccord fluidique complémentaire 6 auquel l'objet désigné par « avant » ou « arrière » est associé. « Avant » désigne le côté axial de l'un des éléments de raccord fluidique 4 et élément de raccord fluidique complémentaire 6 dirigé vers l'autre des élément de raccord fluidique 4 et élément de raccord fluidique complémentaire 6. « Arrière » désigne le côté axial de l'un des élément de raccord fluidique 4 et élément de raccord fluidique complémentaire 6 dirigé à l'opposé de l'autre des élément de raccord fluidique 4 et élément de raccord fluidique complémentaire 6. Ainsi, le côté « avant » de l'élément de raccord fluidique 4 est situé à gauche de la figure 1 et le côté « arrière » de l'élément de raccord fluidique 4 est situé à droite de la figure 1. Les côtés « avant » et « arrière » de l'élément de raccord fluidique complémentaire 6 sont situés à l'opposé.

Chaque élément de raccord fluidique 4 et élément de raccord fluidique complémentaire 6 définit un côté « intérieur » et un côté « extérieur », le côté intérieur étant situé radialement plus proche de l'axe central que le côté « extérieur ».

L'ensemble de raccord fluidique 2 définit un sens d'accouplement S dirigé selon le sens d'introduction de l'élément de raccord fluidique complémentaire 6 dans l'élément de raccord fluidique 4. L'ensemble de raccord fluidique 2 définit un sens de désaccouplement SD dirigé selon le sens de sortie de l'élément de raccord fluidique complémentaire 6 hors de l'élément de raccord fluidique 4.

L'arrière du corps de base 8 est relié à une canalisation de fluide non représentée.

L'élément de raccord fluidique 4 est de plus muni d'une pluralité d'organes de verrouillage 14 aptes à verrouiller l'élément de raccord fluidique complémentaire 6 par rapport au corps de base 8 lorsqu'ils sont dans leur position de verrouillage.

La bague de verrouillage 10 est une pièce de révolution qui entoure le corps de base 8 et est mobile par rapport au corps de base 8 entre différentes positions axiales.

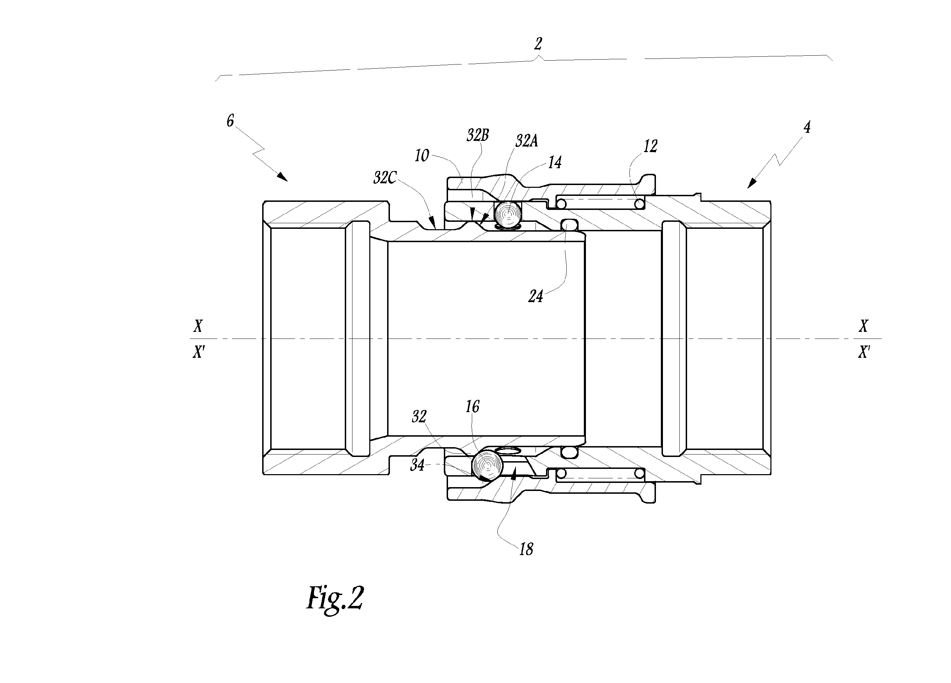

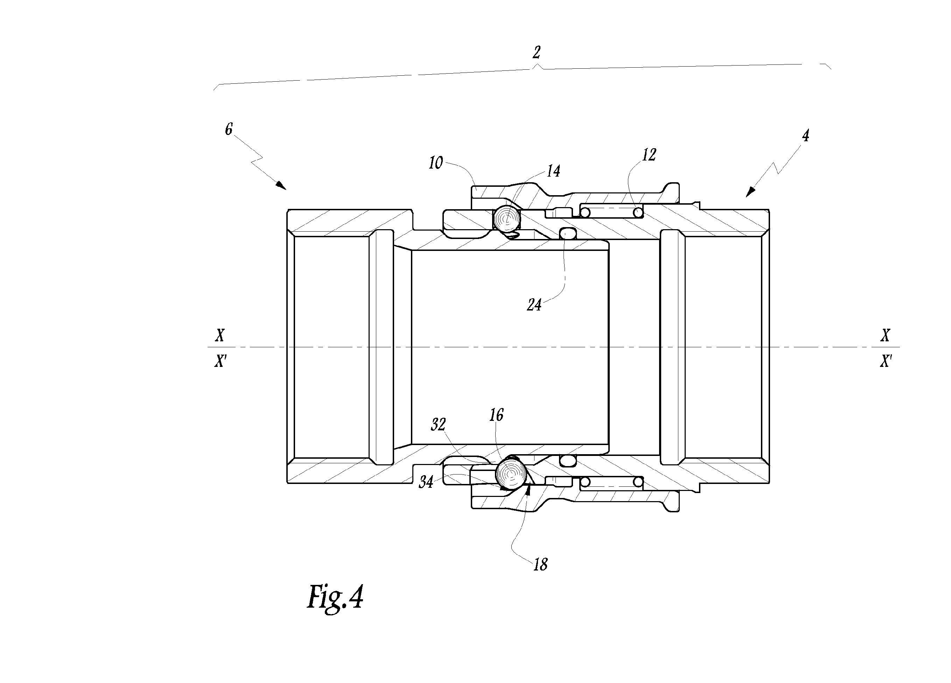

Ces positions sont notamment, au moins une position de blocage des organes de verrouillage (Figures 1 et 2) dans laquelle la bague de verrouillage 10 est repoussée par le ressort 12, une position de libération des organes de verrouillage 14, et une position de contact (Figure 4). Dans la position de la bague dite de blocage, les organes de verrouillage 14 sont bloqués radialement par la bague de verrouillage 10 dans leur position de verrouillage.

La position de la bague de verrouillage 10 dite de libération correspond à la position de la bague de verrouillage 10 la plus en avant dans laquelle les organes de verrouillage 14 sont libres de se déplacer radialement dans leur position de déverrouillage. Dans leur position de verrouillage, avec la bague de verrouillage en position de blocage, les organes de verrouillage 14 dépassent à l'intérieur par rapport au corps 8 et s'opposent, lorsque le raccord est accouplé, à un retrait hors de l'élément de raccord 4 de l'élément de raccord complémentaire 6 ou, lorsque le raccord n'est pas accouplé, à un emmanchement dans l'élément de raccord 4 de l'élément de raccord complémentaire 6. Dans leur position de déverrouillage, radialement vers l'extérieur par rapport à leur position de verrouillage avec les billes 14 qui dépassent à l'extérieur du corps 8, les organes de verrouillage 14 ne dépassent plus à l'intérieur par rapport au corps 8 et libèrent le passage pour l'élément de raccord complémentaire 6 dans l'élément de raccord 4. Ils ne s'opposent alors pas à un retrait hors de l'élément de raccord 4 ou à un emmanchement dans l'élément de raccord 4 de l'élément de raccord complémentaire 6.

L'élément de raccord fluidique 4 comprend également au moins un, et notamment au moins trois, organe(s) d'actionnement 16 de la bague de verrouillage 10 adapté(s) pour pousser la bague de verrouillage depuis sa position de blocage au moins jusqu'à sa position de libération.

En l'occurrence, chaque organe d'actionnement 16 est un organe de révolution et notamment une bille. De même, chaque organe de verrouillage 14 est un organe de révolution et notamment une bille. Le ou chaque organe d'actionnement 16 a un diamètre D supérieur au diamètre d du ou de chaque organe de verrouillage 14, chaque diamètre correspondant à la dimension de l'organe considéré radialement à l'axe X-X.

De préférence, tous les organes d'actionnement 16 ont un même diamètre. De préférence, tous les organes de verrouillage 14 ont un même diamètre.

De plus, le diamètre D du ou de chaque organe d'actionnement 16 est compris entre 105% et 125% du diamètre d du ou de chaque organe de verrouillage 14.

Dans la position de contact de la bague de verrouillage 10, les organes d'actionnement 16 entrent en contact avec une extrémité arrière 20 du logement allongé 18 (voir ci-après).

Le corps de base 8 comprend, pour chaque organe d'actionnement 16, un logement allongé 18 s'étendant parallèlement à l'axe central X-X, débouchant de part et d'autre du corps de base 8 et dont la largeur, perpendiculaire au plan des figures 1 et 2, correspond sensiblement à la dimension transversale de l'organe d'actionnement 16. Chaque logement allongé 18 comprend une extrémité arrière 20 et une extrémité avant 22. L'organe d'actionnement 16 associé est repoussé contre l'extrémité arrière 20 lors de l'accouplement. L'extrémité arrière 20 comporte une pente formant un angle γ compris entre 105° et 130° par rapport à l'axe central X-X et s'évasant vers l'arrière de l'élément de raccord 4.

Avantageusement, lorsque la bague de verrouillage 10 est dans une position de fin de course correspondant à la position de blocage des billes 14 en l'état désaccouplé de l'ensemble 2, le ou chaque organe d'actionnement 16 dépasse du corps de base 8 de part et d'autre d'une distance radiale identique, distance sensiblement égale au dépassement radial intérieur de la bille de verrouillage par rapport au corps de base 8.

La position de libération de la bague de verrouillage est située axialement entre la position de blocage de la bague de verrouillage en l'état désaccouplé et la position de contact de la bague de verrouillage.

En position de fin de course et en l'état désaccouplé, la bague de verrouillage 10 est repoussée élastiquement par le ressort 12 contre chaque organe d'actionnement 16 et chaque organe d'actionnement 16 est en butée contre l'extrémité avant 22. Dans cette position, la bague de verrouillage 10 est en contact avec chaque organe d'actionnement 16.

L'élément de raccord fluidique complémentaire 6 est une pièce de révolution autour d'un axe central X'-X'. L'axe central X'-X' est confondu avec l'axe central X-X en cours d'emmanchement de l'élément de raccord complémentaire 6 avec l'élément de raccord 4. L'élément de raccord complémentaire 6 est raccordé sur l'arrière à une canalisation non représentée et comprend une collerette d'actionnement 32 adaptée pour s'appliquer contre le ou chaque organe d'actionnement 16. La collerette d'actionnement 32 comporte une pente d'actionnement 32A, orientée vers l'avant de l'élément 6. La pente d'actionnement 32A est inclinée d'un angle α de 25° à 50°, en l'occurrence 40°, par rapport à l'axe central X'-X' et s'évase vers l'arrière de l'élément de raccord complémentaire 6. La collerette d'actionnement 32 comporte un sommet 32B en arrière de et adjacent à la pente d'actionnement 32A. L'élément 6 comporte en outre une rainure 32C disposée à l'arrière de la collerette d'actionnement 32. L'élément de raccord fluidique 4 comprend en outre un joint d'étanchéité 24 disposé dans une gorge intérieure 26 ménagée dans le corps de base 8. L'élément de raccord fluidique complémentaire 6 comprend une surface d'étanchéité 28 adaptée pour coopérer avec le joint d'étanchéité 24 à l'état accouplé. La surface d'étanchéité 28 a un diamètre extérieur DE.

Chaque organe d'actionnement 16 et le logement 18 associé délimitent une position radialement intérieure extrême de cet organe d'actionnement 16 par rapport au corps de base 8. Dans cette position radialement intérieure extrême, chaque organe d'actionnement 16 est situé radialement à l'écart du diamètre extérieur DE de la surface d'étanchéité 28 en cours d'accouplement.

Pour chaque organe de verrouillage 14, le corps de base 8 comprend un logement 30. Le logement 30 est en l'occurrence principalement cylindrique à section circulaire et guide l'organe de verrouillage 14 dans son mouvement radial entre sa position de verrouillage et sa position de déverrouillage. Le logement 30 est disposé en arrière par rapport à l'extrémité avant 22 du logement allongé 18 et en avant par rapport à l'extrémité arrière 22. Les positions axiales des logements 18 et 30 se recouvrent donc partiellement. Chaque organe de verrouillage 14 et le logement 30 associé délimitent une position radialement intérieure extrême de cet organe de verrouillage 14 par rapport au corps de base 8. Dans cette position radialement intérieure extrême, chaque organe de verrouillage 14 est situé radialement à l'écart du diamètre extérieur DE de la surface d'étanchéité 28 en cours d'accouplement.

L'extrémité arrière 20 du logement allongé 18 est disposée axialement en arrière par rapport au logement 30.

La bague de verrouillage 10 comporte une surface de recouvrement 33 et une pente d'actionnement 34 contre laquelle s'applique le ou chaque organe d'actionnement 16 lors de l'accouplement. La pente d'actionnement 34 étant inclinée d'un angle β de 25° à 50°, en l'occurrence 35°, par rapport à l'axe central X-X et s'évasant vers l'avant de l'élément de raccord 4. L'angle α est supérieur au deuxième angle β, de préférence d'au moins 5°, de préférence au plus de 10°

Le fait que le diamètre D des billes d'actionnement ou organes d'actionnement 16 est supérieur de 5 à 25% à celui des billes de verrouillage ou organes de verrouillage 14, correspond pour les billes de verrouillage de diamètre 7mm à des billes d'actionnement de diamètre entre 7,5 et 8,5 mm.

En position désaccouplée (Figure 1), la bague de verrouillage 10 est repoussée en position de blocage en butée contre les billes d'actionnement ou organes d'actionnement 16. La pente d'actionnement 34 coopère alors avec les billes d'actionnement 16. Les billes de verrouillage 14 sont bloquées radialement en position de verrouillage par la surface de recouvrement 33 et dépassent radialement à l'intérieur par rapport au corps 8.

L'ensemble selon l'invention fonctionne de la manière suivante lors de l'accouplement. Les explications sont données pour une bille de verrouillage et une bille d'actionnement, le comportement étant analogue pour les autres billes de verrouillage/organes de verrouillage 14 et les autres billes d'actionnement/organes d'actionnement 16.

L'élément de raccord complémentaire 6 est inséré dans l'élément de raccord 4 par l'opérateur dans la direction S selon l'axe X-X. La collerette 32 s'engage dans le corps de base 8 avec un jeu radial réduit puis la surface d'étanchéité 28 parvient au contact du joint 24, créant alors l'étanchéité entre les deux éléments de raccord 6 et 4. La collerette 32 vient au contact de la bille d'actionnement 16. La bille d'actionnement est alors coincée en prise entre l'élément de raccord complémentaire 6 et la bague de verrouillage 10 en position de blocage, précisément entre la pente d'actionnement 32A inclinée d'un angle α de la collerette d'actionnement 32 et la pente d'actionnement 34 de la bague 10 inclinée d'un angle β. En conséquence, un effort avec une résultante radiale vers l'intérieur s'applique sur la bille d'actionnement 16 et garantit son maintien en prise entre l'élément de raccord complémentaire 6 et la bague de verrouillage 10 lorsque l'élément de raccord complémentaire 6 repousse axialement la bille d'actionnement 16 dans le logement allongé 18.

Le déplacement axial de la bille d'actionnement 16 entraîne axialement la bague de verrouillage 10 à l'encontre du ressort 12.

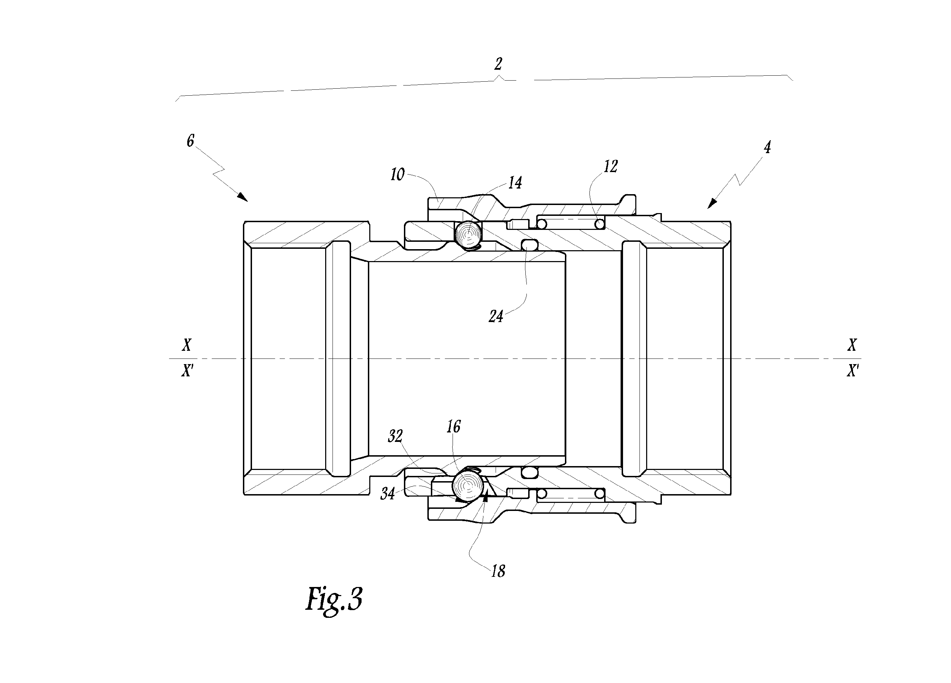

Lorsque la pente d'actionnement 34 de l'élément de raccord complémentaire 6 arrive au contact de la bille de verrouillage 14, les centres de la bille de verrouillage 14 et de la bille d'actionnement 16 sont sensiblement dans la même position axiale (Figure 3). Dans cette configuration, la bille de verrouillage dispose d'un jeu radial avec la bague de verrouillage 10 et la bille d'actionnement n'est pas encore au contact de l'extrémité arrière 20 du logement allongé 18.

La progression de l'élément de raccord complémentaire 6 dans l'élément de raccord 4 et donc celle de la bague de verrouillage 10 se poursuit.

La bague de verrouillage 10 atteint sa position de libération (non représentée) des organes de verrouillage 14, dans laquelle les organes de verrouillage 14 dispose de suffisamment de jeu radial avec la bague de verrouillage 10 sur l'extérieur du corps 8 pour pouvoir se déplacer en position de déverrouillage. La bille d'actionnement 16 n'est pas encore au contact de l'extrémité arrière 20 du logement allongé 18.

La progression de l'élément de raccord complémentaire 6 dans l'élément de raccord 4 et donc celle de la bague de verrouillage 10 se poursuit.

Lorsque la bille d'actionnement 16 parvient au contact de l'extrémité arrière 20 du logement 18 allongé (Figure 4), la course qu'a parcourue la bague de verrouillage 10 est supérieure à sa course minimale nécessaire pour la libération de la bille de verrouillage, ce qui garantit que la bille de verrouillage n'a pas à agir sur le déplacement vers l'arrière de la bague de verrouillage 10. Ceci conduit à des faibles efforts manuels lors de l'accouplement.

Dans cette configuration, où la bague de verrouillage 10 est dans sa position dite de contact, la bille de verrouillage 14, repoussée par la collerette d'actionnement 32 de l'élément de raccord complémentaire 6, dépasse sur l'extérieur du corps de base 8 si bien que si la bille d'actionnement 16 vient à perdre le contact avec la pente d'actionnement 34, la bague de verrouillage 10, repoussée vers l'avant par le ressort 12, ne pourra être repoussée dans une position où elle pourrait bloquer la bille d'actionnement 16 dans la rainure 32C derrière la collerette d'actionnement 32 et où la bille de verrouillage 14 ne serait pas en position de verrouillage dans la rainure 32C de l'élément de raccord complémentaire 6. Cette configuration non verrouillée ne serait pas visible de l'opérateur et pourrait mettre sa sécurité en danger.

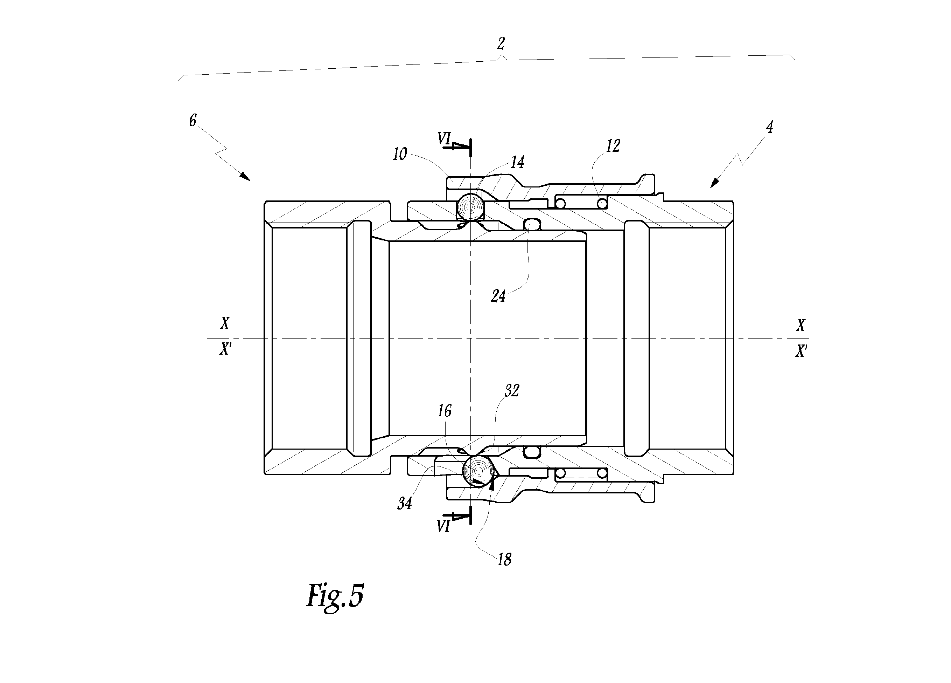

Puis la bille d'actionnement 16 est ensuite guidée radialement vers l'extérieur par sa coopération avec la pente de l'extrémité arrière 20 du logement allongé 18 (γ = 120°) sous la progression de l'élément de raccord complémentaire 6 dans le sens d'accouplement S, et ceci jusqu'à ce que la bille d'actionnement passe radialement sur le sommet 32B de la collerette d'actionnement 32 de l'élément de raccord complémentaire 6 (Figure 5).

Simultanément, la bague de verrouillage 10 poursuit son déplacement à l'encontre du ressort 12, au-delà de la position de contact.

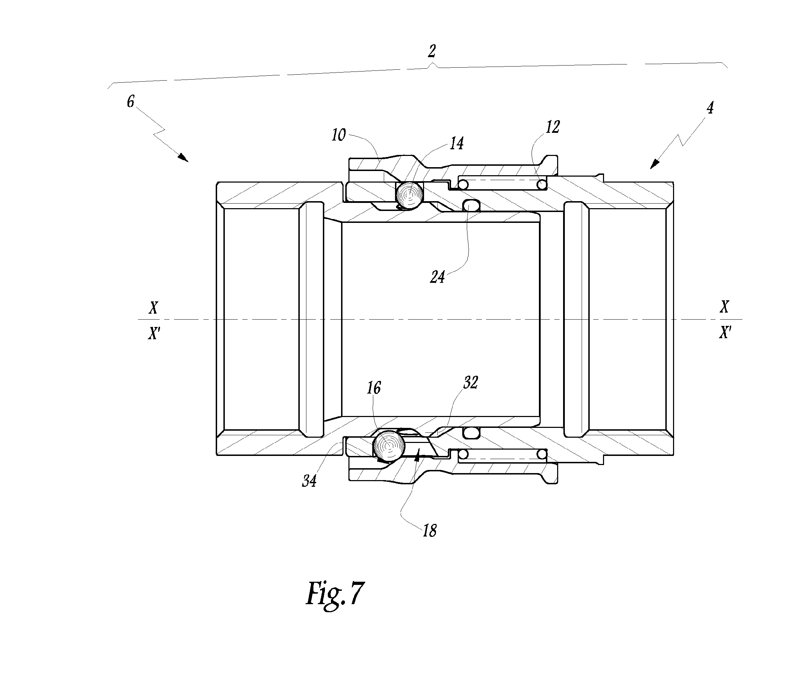

Simultanément, ou avant que la bille d'actionnement 16 n'atteigne le sommet 32B de la collerette d'actionnement 32, le sommet 32B passe axialement la bille de verrouillage 14, et la bille de verrouillage peut se déplacer radialement vers l'intérieur dans la rainure 32C dans une position de verrouillage de l'élément de raccord complémentaire 6 dans l'élément de raccord 4. Le fait que la bille de verrouillage 14 soit au contact du sommet 32B dans sa position de déverrouillage ou radialement en regard de la rainure 32C lorsque la bille d'actionnement 16 parvient au contact du sommet 32B garantit que la bague de verrouillage 10 ne peut être repoussée dans une position où elle pourrait bloquer la bille d'actionnement 16 dans la rainure 32C derrière la collerette d'actionnement 32 et où la bille de verrouillage 14 ne serait pas en position de verrouillage dans la rainure 32C de l'élément de raccord complémentaire 6. Lorsque la bille d'actionnement entre en contact avec le sommet 32B et que la bille est en regard de la rainure 32C, la bague de verrouillage 10 est repoussée sous l'action du ressort 12 dans la position de blocage dans laquelle la surface de recouvrement 33 de la bague de verrouillage 10 vient recouvrir radialement les billes de verrouillage dans la rainure 32C de l'élément de raccord complémentaire 6 (Figure 7). Dans son mouvement d'avancée, la bague de verrouillage 10 repousse, dans la rainure 32C et dans le logement allongé 18, la bille d'actionnement 16 qui parvient en butée contre l'extrémité avant 22. L'opérateur relâche son action sur l'élément de raccord 6. L'état accouplé est atteint.

Dans toute la phase d'accouplement, la bille de verrouillage 14 n'a aucune action sur le recul de la bague de verrouillage.

La progression de la bille d'actionnement 16 dans le logement allongé 18, tout d'abord axiale puis radiale, repousse la bague de verrouillage 10 depuis sa position de blocage (Figure 2) jusqu'à une position arrière (Figure 5) au-delà de la position de libération et de la position de contact (Figure 4).

L'accouplement est automatique dans le sens où la seule action d'emmanchement de l'élément de raccord complémentaire 6 dans élément de raccord fluidique 4 par l'opérateur conduit à l'accouplement des deux éléments de raccord 4, 6. La bague de verrouillage n'a pas à être déplacée par une action supplémentaire.

En position accouplée, la bague de verrouillage 10 est repoussée en butée contre la bille d'actionnement 16 qui ne vient pas au contact de l'élément de raccord complémentaire 6. Ainsi la position de la bague de verrouillage 10 en l'état accouplé est axialement identique à sa position en l'état désaccouplé de l'ensemble de raccord. Ces deux positions correspondent à une position de blocage des organes de verrouillage 14 dans leur position de verrouillage.

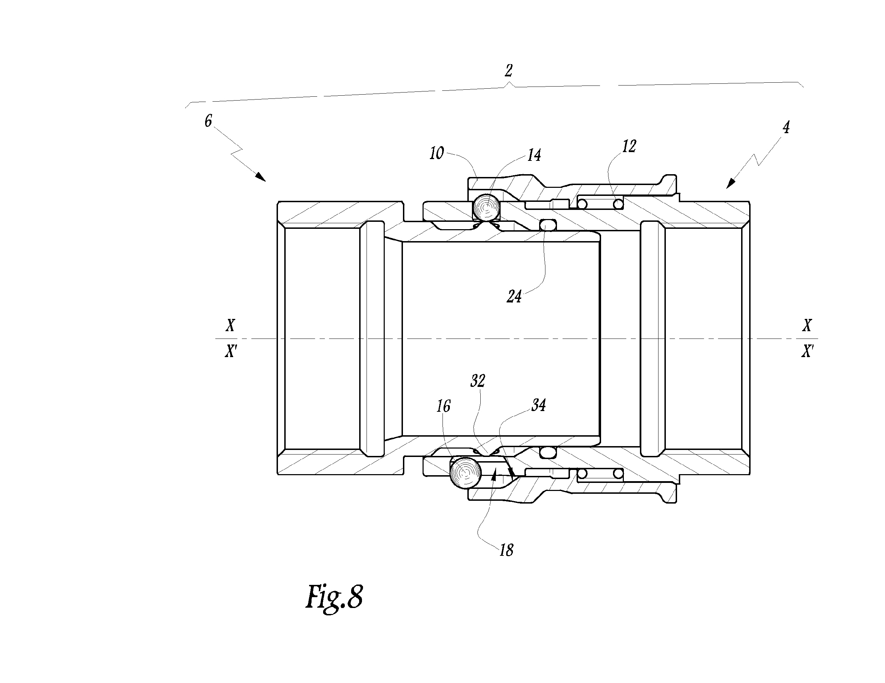

Le désaccouplement est effectué de la manière suivante. La bague de verrouillage 10 est déplacée vers l'arrière de l'élément de raccord 4 jusqu'à une butée, au-delà de la position de libération, et maintenue dans cette position par l'opérateur. Ceci libère un espace radial de dégagement de la bague de verrouillage 10 pour la bille de verrouillage 14 et pour la bille d'actionnement 16 (Figure 8).

L'opérateur retire dans le sens de désaccouplement SD l'élément de raccord complémentaire 6 dont la collerette 32 repousse radialement vers l'extérieur les billes de verrouillage dans leur position de déverrouillage et les billes d'actionnement et dissocie les deux éléments de raccord.

Les caractéristiques de l'invention apportent les avantages suivants.

La différence de diamètres entre les billes d'actionnement et billes de verrouillage augmente par rapport à l'état de la technique la prise de chaque bille d'actionnement entre l'élément de raccord 6 et la bague de verrouillage 10 à géométrie de corps de base équivalente alors que la surface interne de la bague de verrouillage 10, comportant la surface de recouvrement 33, la pente d'actionnement 34 et formant l'espace radial de dégagement pour les billes, et la surface externe du corps 8, sur laquelle est ménagée le logement allongé 18, restent de construction simple car de révolution, sans aménagement supplémentaire.

La différence de diamètres garantit également plus de dégagement radial pour les billes de verrouillage par rapport à la bague de verrouillage dès que l'élément de raccord complémentaire 6 parvient au contact des billes de verrouillage 14, ce qui garantit que les billes de verrouillage 14 n'ont pas d'action sur le recul de la bague de verrouillage 10 à l'accouplement et que les efforts d'accouplement sont minimaux.

La différence d'inclinaison ou d'angle entre la pente d'actionnement 32A de la collerette d'actionnement 32 de l'élément de raccord complémentaire 6 (angle α) et la pente d'actionnement 34 de la bague de verrouillage 10 (angle β) garantit que la bille ou l'organe d'actionnement 16 reste en prise entre l'élément de raccord complémentaire 6 et la bague de verrouillage 10, sans s'échapper radialement vers l'extérieur dans le déplacement de la bille d'actionnement 16 dans le logement allongé 18 jusqu'à sa venue en contact avec l"extrémité arrière 22 au cours de l'accouplement. De préférence, la différence d'angle est supérieure à 0° et inférieure à 10° et est notamment égale à 5°. Il est nécessaire que l'angle α soit supérieur ou égal à l'angle β.

Le fait qu'en position désaccouplée, la bague de verrouillage 10 est repoussée sur l'avant en butée contre la bille ou l'organe d'actionnement 16 conduit à une maitrise des emplacements des contacts de l'organe d'actionnement 16 avec la bague de verrouillage 10 et avec l'élément de raccord complémentaire 6 dès le début de l'accouplement.

La pente de l'extrémité arrière 20 du logement 18 d'un angle γ permet de chasser la bille d'actionnement 16 sous peu d'effort axial d'accouplement. L'angle γ est de préférence égal à 120°, mais peut être compris entre 105° et 130°.

Le fait que le diamètre DE de la surface d'étanchéité 28 de l'élément de raccord complémentaire 6 est inférieur au diamètre intérieur enveloppant minimal sur lequel sont disposées les billes d'actionnement et au diamètre intérieur enveloppant minimal sur lequel sont disposées les billes de verrouillage, permet de préserver la surface d'étanchéité 28 des contacts avec les billes d'actionnement et de verrouillage à l'accouplement et au désaccouplement.

Selon l'invention, au moins 3 organes d'actionnement sont prévus, disposés régulièrement autour de l'axe X-X (tous les 120°) pour répartir l'effort exercé sur la bague de verrouillage à l'accouplement, limiter la fragilisation du corps de base 8 et loger un nombre important de billes de verrouillage (en l'occurrence 18 billes de verrouillage dans le mode de réalisation présenté).

En variante non représentée, l'ensemble de raccord comprend un élément de raccord complémentaire 6 et/ou un élément de raccord 4 muni d'une soupape.

## Revendications

1. Elément de raccord fluidique (4), du type comprenant :
- un corps de base (8) définissant un axe central (X-X) d'emmanchement d'un élément de raccord fluidique complémentaire (6),
- une bague de verrouillage (10), mobile par rapport au corps de base (8),
- au moins une bille de verrouillage (14) apte à verrouiller l'élément de raccord fluidique complémentaire (6) par rapport au corps de base (8),
la ou chaque bille de verrouillage (14) étant mobile radialement dans le corps (8) entre une position de verrouillage, dans laquelle la bille de verrouillage (14) est apte à verrouiller l'élément de raccord fluidique complémentaire (6), et une position de déverrouillage, dans laquelle la bille de verrouillage (14) libère le passage pour l'élément de raccord fluidique complémentaire (6), au moins une bille d'actionnement (16) de la bague de verrouillage (10) apte à être repoussée dans un logement allongé (18) du corps de base (8) par l'élément de raccord fluidique complémentaire (6) au cours de l'accouplement de l'élément de raccord (4) et de l'élément de raccord complémentaire (6), pour déplacer axialement la bague de verrouillage depuis une position de blocage, dans laquelle la ou chaque bille de verrouillage (14) est bloquée dans ladite position de verrouillage, au moins jusqu'à une position de libération dans laquelle la ou chaque bille de verrouillage (14) est libre de se déplacer dans ladite position de déverrouillage,
- des moyens de rappel de la bague de verrouillage vers ladite position de blocage,
**caractérisé en ce que** la ou chaque bille d'actionnement (16) a un diamètre (D) supérieur au diamètre (d) de la ou de chaque bille de verrouillage (14).

2. Elément de raccord selon la revendication 1, **caractérisé en ce que** le diamètre (D) de la ou de chaque bille d'actionnement (16) est compris entre 105% et 125% du diamètre (d) de la ou de chaque bille de verrouillage (14).

3. Elément de raccord selon l'une quelconque des revendications précédentes, **caractérisé en ce que**, lorsque la bague de verrouillage (10) est dans ladite position de blocage en l'état désaccouplé du raccord, la ou chaque bille d'actionnement (16) dépasse du corps de base (8) radialement de part et d'autre d'une distance sensiblement identique.

4. Elément de raccord selon l'une quelconque des revendications précédentes, **caractérisé en ce qu'**une extrémité arrière (20) du logement allongé (18) comporte une pente formant un angle (γ) compris entre 105° et 130° par rapport à l'axe central (X-X).

5. Elément de raccord selon l'une quelconque des revendications précédentes, **caractérisé en ce que**, au cours de l'accouplement, la position la plus en avant de la bague de verrouillage (10) dans laquelle la ou chaque bille de verrouillage (14) est libre de se déplacer radialement dans ladite position de déverrouillage est située axialement entre ladite position de blocage et une position de la bague de verrouillage, dans laquelle la ou chaque bille d'actionnement (16) entre en contact avec une extrémité arrière (20) du logement allongé.

6. Elément de raccord selon l'une quelconque des revendications précédentes, **caractérisé en ce que** lorsque la bague de verrouillage (10) est dans ladite position de blocage en l'état désaccouplé du raccord, la bague de verrouillage (10) est repoussée contre la ou chaque bille d'actionnement (16) et la ou chaque bille d'actionnement est en contact avec une extrémité avant (22) du logement allongé (18).

7. Elément de raccord selon l'une des revendications précédentes, **caractérisé en ce que** la surface externe du corps de base (8) sur laquelle est ménagé ledit logement allongé (18) est une surface de révolution autour de l'axe central (X-X) et **en ce que** la surface interne de la bague de verrouillage (10) est une surface de révolution autour de l'axe central (X-X).

8. Elément de raccord selon l'une quelconque des revendications précédentes, **caractérisé en ce que** l'élément de raccord fluidique (4) comprend au moins trois billes d'actionnement (16).

9. Ensemble de raccord fluidique (2) comprenant un élément de raccord fluidique (4) et un élément de raccord fluidique complémentaire (6), **caractérisé en ce que** l'élément de raccord fluidique (4) est un élément selon l'une quelconque des revendications précédentes.

10. Ensemble de raccord fluidique selon la revendication 9, **caractérisé en ce que** l'élément de raccord fluidique complémentaire (6) comprend une collerette d'actionnement (32) de la ou chaque bille d'actionnement (16) pour le déplacement de la bague de verrouillage (10) depuis ladite position de blocage jusqu'au moins ladite position de libération au cours de l'accouplement et une rainure (32C) adaptée pour recevoir la ou chaque bille de verrouillage (14) dans ladite position de verrouillage en l'état accouplé de l'ensemble de raccord.

11. Ensemble de raccord fluidique selon la revendication 10, **caractérisé en ce que** la collerette (32) comporte une première pente d'actionnement (32A) inclinée d'un premier angle (α) par rapport à l'axe central, **en ce que** la bague de verrouillage (10) comporte une seconde pente d'actionnement (34), la seconde pente d'actionnement (34) étant inclinée d'un second angle (β) par rapport à l'axe central, **en ce que** la ou chaque bille d'actionnement (16) est en prise entre la première pente d'actionnement (32A) de l'élément de raccord complémentaire (6) et la seconde pente d'actionnement (34) de la bague de verrouillage (10) pour le déplacement de la bague d'actionnement depuis ladite position de blocage jusqu'au moins ladite position de libération au cours de l'accouplement et **en ce que** le premier angle (α) est supérieur au deuxième angle (β).

12. Ensemble de raccord fluidique selon l'une des revendications 10 ou 11, **caractérisé en ce que**, au cours de l'accouplement, lorsque la ou chaque bille d'actionnement (16) entre en contact avec un sommet (32B) de ladite collerette (32), la ou chaque bille de verrouillage (14) est au contact du sommet (32B) ou radialement en regard de ladite rainure (32C).

13. Ensemble de raccord fluidique selon l'une des revendications 9 à 12, **caractérisé en ce que**, au cours de l'accouplement, lorsque la ou chaque bille d'actionnement (16) entre en contact avec une extrémité arrière (20) du logement allongé (18), la ou chaque bille de verrouillage (14) dépasse radialement sur l'extérieur du corps de base (8).

14. Ensemble de raccord fluidique selon l'une des revendications 9 à 13, **caractérisé en ce que** l'élément de raccord fluidique (4) comprend un joint d'étanchéité (24) et l'élément de raccord fluidique complémentaire (6) comprend une surface d'étanchéité (28) adaptée pour coopérer avec ledit joint d'étanchéité à l'état accouplé de l'ensemble de raccord, **en ce que** la ou chaque bille de verrouillage (14) et/ou d'actionnement (16) est apte à occuper une position radialement intérieure extrême, et **en ce que** dans ladite position radialement intérieure extrême, la bille de verrouillage (14) et/ou d'actionnement est située radialement à l'écart d'un diamètre extérieur (DE) de ladite surface d'étanchéité.

15. Ensemble de raccord fluidique selon l'une des revendications 9 à 14, **caractérisé en ce qu'**en position de blocage de la bille de verrouillage dans ladite position de verrouillage en l'état accouplé de l'ensemble de raccord, la bague de verrouillage (10) est élastiquement repoussée contre la bille d'actionnement (16) et **en ce que** la bille d'actionnement (16) n'est pas au contact de l'élément de raccord fluidique complémentaire (6).

## Patentansprüche

1. Fluidkupplungselement (4) der Art, die umfasst:
- einen Grundkörper (8), der eine Mittelachse (X-X) der Aufnahme eines komplementären Fluidkupplungselements (6) definiert,
- einen Verriegelungsring (10), der in Bezug auf den Grundkörper (8) beweglich ist,
- mindestens eine Verriegelungskugel (14), die geeignet ist, das komplementäre Fluidkupplungselement (6) in Bezug auf den Grundkörper (8) zu verriegeln,
wobei die oder jede Verriegelungskugel (14) radial in dem Körper (8) zwischen einer Verriegelungsposition, in der die Verriegelungskugel (14) angepasst ist, das komplementäre Fluidkupplungselement (6) zu verriegeln, und einer Entriegelungsposition, in der die Verriegelungskugel (14) den Durchgang für das komplementäre Fluidkupplungselement (6) freigibt, beweglich ist, wobei mindestens eine Betätigungskugel (16) des Verriegelungsrings (10) geeignet ist, von dem komplementären Fluidkupplungselement (6) in eine längliche Aufnahme (18) des Grundkörpers (8) während des Kupplungsvorgangs des Kupplungselements (4) und des komplementären Kupplungselements (6) geschoben zu werden, um axial den Verriegelungsring von einer Blockierposition, in der die oder jede Verriegelungskugel (14) in der Verriegelungsposition blockiert ist, mindestens bis zu einer Position der Freisetzung, in der die oder jede Verriegelungskugel (14) frei ist, sich in die Entriegelungsposition zu bewegen, zu verschieben,
- Mittel zur Rückstellung des Verriegelungsrings in die Blockierposition,
**dadurch gekennzeichnet, dass** die oder jede Betätigungskugel (16) einen Durchmesser (D) aufweist, der größer ist als der Durchmesser (d) der oder jeder Verriegelungskugel (14).

2. Kupplungselement nach Anspruch 1, **dadurch gekennzeichnet, dass** der Durchmesser (D) der oder jeder Betätigungskugel (16) zwischen 105% und 125% des Durchmessers der oder jeder Verriegelungskugel (14) liegt.

3. Kupplungselement nach einem beliebigen der vorhergehenden Ansprüche, **dadurch gekennzeichnet, dass**, wenn die Verriegelungskugel (10) in der Blockierposition im von der Kupplung entkuppelten Zustand ist, die oder jede Betätigungskugel (16) den Grundkörper (8) radial beidseitig um eine im Wesentlichen identische Distanz übersteigt.

4. Kupplungselement nach einem beliebigen der vorhergehenden Ansprüche, **dadurch gekennzeichnet, dass** ein hinteres Ende (20) der länglichen Aufnahme (18) eine Neigung aufweist, die einen Winkel (γ) zwischen 105° und 130° in Bezug auf die Mittelachse (X-X) bildet.

5. Kupplungselement nach einem beliebigen der vorhergehenden Ansprüche, **dadurch gekennzeichnet, dass** während des Kupplungsvorgangs die vorderste Position des Verriegelungsrings (10), in der die oder jede Verriegelungskugel (14) frei ist, sich radial in die Entriegelungsposition zu bewegen, axial zwischen der Blockierposition und einer Position des Verriegelungsrings, in der die oder jede Betätigungskugel (16) in Kontakt mit einem hinteren Ende (20) der länglichen Aufnahme tritt, liegt.

6. Kupplungselement nach einem beliebigen der vorhergehenden Ansprüche, **dadurch gekennzeichnet, dass**, wenn der Verriegelungsring (10) in der Blockierposition im entkuppelten Zustand der Kupplung ist, der Verriegelungsring (10) gegen die oder jede Betätigungskugel (16) gedrückt wird und die oder jede Betätigungskugel in Kontakt mit einem vorderen Ende (22) der länglichen Aufnahme (18) ist.

7. Kupplungselement nach einem der vorhergehenden Ansprüche, **dadurch gekennzeichnet, dass** die Außenfläche des Grundkörpers (8), an der die längliche Aufnahme (18) angeordnet ist, eine Rotationsfläche um die Mittelachse (X-X) ist, und dass die Innenfläche des Verriegelungsrings (10) eine Rotationsfläche um die Mittelachse (X-X) ist.

8. Kupplungselement nach einem beliebigen der vorhergehenden Ansprüche, **dadurch gekennzeichnet, dass** das Fluidkupplungselement (4) mindestens drei Betätigungskugeln (16) umfasst.

9. Fluidkupplungsanordnung (2), ein Fluidkupplungselement (4) und ein komplementäres Fluidkupplungselement (6) umfassend, **dadurch gekennzeichnet, dass** das Fluidkupplungselement (4) ein Element nach einem beliebigen der vorhergehenden Ansprüche ist.

10. Fluidkupplungsanordnung nach Anspruch 9, **dadurch gekennzeichnet, dass** das komplementäre Fluidkupplungselement (6) einen Betätigungsbund (32) der oder jeder Betätigungskugel (15) für die Verschiebung des Verriegelungsrings (10) aus der Blockierposition bis mindestens in die Position der Freisetzung während des Kupplungsvorgangs und eine Nut (32C) umfasst, die angepasst ist, die oder jede Verriegelungskugel (14) in der Verriegelungsposition im gekuppelten Zustand der Kupplungsanordnung aufzunehmen.

11. Fluidkupplungsanordnung nach Anspruch 10, **dadurch gekennzeichnet, dass** der Bund (32) eine erste Betätigungsneigung (32A) aufweist, die um einen ersten Winkel (α) in Bezug auf die Mittelachse geneigt ist, dass der Verriegelungsring (10) eine zweite Betätigungsneigung (34) aufweist, wobei die zweite Betätigungsneigung (34) um einen zweiten Winkel (β) in Bezug auf die Mittelachse geneigt ist, dass die oder jede Betätigungskugel (16) zwischen der ersten Betätigungsneigung (32A) des komplementären Kupplungselements (6) und der zweiten Betätigungsneigung (34) des Verriegelungsrings (10) für die Verschiebung des Betätigungsrings von der Blockierposition bis mindestens zur Position der Freisetzung während des Kupplungsvorgangs gefangen ist, und dass der erste Winkel (α) größer als der zweite Winkel (β) ist.

12. Fluidkupplungsanordnung nach einem der Ansprüche 10 oder 11, **dadurch gekennzeichnet, dass** während des Kupplungsvorgangs, wenn die oder jede Betätigungskugel (16) in Kontakt mit einem Scheitel (32B) des Bundes (32) tritt, die oder jede Verriegelungskugel (14) im Kontakt mit dem Scheitel (32B) ist oder radial in der Nut (32C) liegt.

13. Fluidkupplungsanordnung nach einem der Ansprüche 9 bis 12, **dadurch gekennzeichnet, dass** während des Kupplungsvorgangs, wenn die oder jede Betätigungskugel in Kontakt mit einem hinteren Ende (20) der länglichen Aufnahme (18) tritt, die oder jede Verriegelungskugel (14) radial über das Äußere des Grundkörpers (8) übersteht.

14. Fluidkupplungsanordnung nach einem der Ansprüche 9 bis 13, **dadurch gekennzeichnet, dass** das Fluidkupplungselement (4) eine Dichtung (24) umfasst und das komplementäre Fluidkupplungselement (6) eine Dichtfläche (28) umfasst, die geeignet ist, mit der Dichtung im gekuppelten Zustand der Kupplungsanordnung zusammenzuarbeiten, dass die oder jede Verriegelungskugel (14) und/oder Betätigungskugel (16) geeignet ist, eine radial innere Extremposition einzunehmen, und dass in der radial inneren Extremposition die Verriegelungskugel (14) und/oder Betätigungskugel radial zu einem Außendurchmesser (DE) der Dichtfläche beabstandet angeordnet ist.

15. Fluidkupplungsanordnung nach einem der Ansprüche 9 bis 14, **dadurch gekennzeichnet, dass** in der Blockierposition der Verriegelungskugel in der Verriegelungsposition im gekuppelten Zustand der Verriegelungsring (10) elastisch gegen die Betätigungskugel (16) gedrückt wird, und dass die Betätigungskugel (16) nicht in Kontakt mit dem komplementären Fluidkupplungselement (6) ist.

## Claims

1. A fluid coupling element (4), of the type comprising
- a base body (8) defining a central axis (X-X) of fit of an complementary fluid coupling element (6),
- a locking ring (10), movable relative to the base body (8),
- at least one locking ball (14) that is capable of locking the complementary fluid coupling element (6) relative to the base body (8),
the or each locking ball (14) being radially movable in the body (8) between a locking position wherein the locking ball (14) is adapted to lock the complementary fluid coupling element (6), and an unlocking position wherein the locking ball (14) frees the passage for the complementary fluid coupling element (6), at least one actuating ball (16) of the locking ring (10) adapted to be pushed into an elongated housing (18) of the base body (8) by the complementary fluid coupling element (6) during the coupling of the coupling element (4) and the complementary coupling element (6) so as to move the locking ring axially from a locking position, wherein the or each locking ball (14) is locked in said locking position, at least into a release position in which the or each locking ball (14) is free to move in said unlocking position,
- means for returning the locking ring to said locking position,
**characterised in that** the or each actuating ball (16) has a diameter (D) greater than the diameter (d) of the or each locking ball (14).

2. A coupling element according to claim 1, **characterised in that** the diameter (D) of the or each actuating ball (16) is between 105% and 125% of the diameter (d) of the or each locking ball (14).

3. A coupling element according to any one of the preceding claims, **characterised in that**, when the locking ring (10) is in said locking position in the uncoupled state of the coupling, the or each actuating ball (16) protrudes from the base body (8) radially from both the sides by a substantially identical distance.

4. A coupling element according to any one of the preceding claims, **characterised in that** a rear end (20) of the elongated housing (18) has a slope forming an angle (γ) of between 105 ° and 130 ° relative to the central axis (X-X).

5. A coupling element according to any one of the preceding claims, **characterised in that**, during the coupling, the forward most position of the locking ring (10) wherein the or each locking ball (14) is free to move radially in said unlocking position is located axially between said locking position and a position of the locking ring, wherein the or each actuating ball (16) enters into contact with a rear end (20) of the elongated housing.

6. A coupling element according to any one of the preceding claims, **characterised in that** when the locking ring (10) is in said locking position in the uncoupled state of the coupling, the locking ring (10) is pushed against the or each actuating ball (16) and the or each actuating ball is in contact with a front end (22) of the elongated housing (18).

7. A coupling element according to one of the preceding claims, **characterised in that** the outer surface of the base body (8) on which said elongated housing is arranged (18) is a surface of revolution about the central axis (X-X) and **in that** the inner surface of the locking ring (10) is a surface of revolution about the central axis (X-X).

8. A coupling element according to any one of the preceding claims, **characterised in that** the fluid coupling element (4) comprises at least three actuating balls (16).

9. A fluid coupling assembly (2) comprising a fluid coupling element (4) and an complementary fluid coupling element (6), **characterised in that** the fluid coupling element (4) is an element according to any one of the preceding claims.

10. A fluid coupling assembly as claimed in claim 9, **characterised in that** the complementary fluid coupling element (6) comprises an actuating collar (32) for actuation of the or each actuating ball (16) for moving the locking ring (10) from said locking position to at least said release position during the coupling and a groove (32C) adapted to receive the or each locking ball (14) in said locking position in the coupled state of the coupling assembly.

11. A fluid coupling assembly as claimed in claim 10, **characterised in that** the collar (32) has a first slope of actuation (32A) inclined at an first angle (α) relative to the central axis, and **in that** the locking ring (10) has a second slope of actuation (34), the second slope of actuation (34) being inclined at a second angle (β) relative to the central axis, and **in that** the or each actuating ball (16) is engaged between the first slope of actuation (32A) of the complementary coupling element (6) and the second slope of actuation (34) of the locking ring (10) for the displacement of the locking ring from said locking position to at least the said release position during the coupling and **in that** the first angle (α) is greater than the second angle (β).

12. A fluid coupling according to one of claims 10 or 11, **characterised in that**, during the coupling, when the or each actuating ball (16) enters into contact with a top (32B) of said collar (32), the or each locking ball (14) is in contact with the top (32B) and radially facing said groove (32C).

13. A fluid coupling assembly according to one of claims 9 to 12, **characterised in that**, during the coupling, when the or each actuating ball (16) enters into contact with a rear end (20) of the elongated housing (18), the or each locking ball (14) projects radially over the exterior of the base body (8).

14. A fluid coupling assembly according to one of claims 9 to 13, **characterised in that** the fluid coupling element (4) includes a sealing gasket (24) and the complementary fluid coupling (6) includes a sealing surface (28) adapted to cooperate with said sealing gasket in the coupled state of the coupling assembly, **in that** the or each locking ball (14) and / or actuating ball (16) is capable of occupying a radially inner most position, and **in that** in said radially innermost position, the locking ball (14) and / or actuating ball is situated radially away from an exterior diameter (DE) of said sealing surface.

15. A fluid coupling assembly as claimed in one of claims 9 to 14, **characterised in that** in the locking position of the locking ball in said locking position in the coupled state of the coupling assembly, the locking ring (10) is resiliently pressed against the actuating ball (16) and **in that** the actuating ball (16) is not in contact with the complementary fluid coupling element (6).
